Europäisches Patentamt

**European Patent Office**

**Office européen des brevets**

(11) Publication number: **0 358 522**
**A2**

## EUROPEAN PATENT APPLICATION

(21) Application number: **89309118.1**

(51) Int. Cl.5: **F 01 N 3/02**

(22) Date of filing: **08.09.89**

(30) Priority: **08.09.88 US 242061**

(43) Date of publication of application:
**14.03.90 Bulletin 90/11**

(84) Designated Contracting States:
**AT BE CH DE ES FR GB GR IT LI NL SE**

(71) Applicant: **MINNESOTA MINING AND MANUFACTURING COMPANY**
**3M Center, P.O. Box 33427**
**Saint Paul, MN 55133- 3427 (US)**

(72) Inventor: **Johnson, Donald D. c/o Minnesota Mining and Manufacturing Company 2501 Hudson Road**
**St. Paul Minnesota 55144-1000 (US)**

**Bloom, Richard L. c/o Minnesota Mining and Manufacturing Company 2501 Hudson Road**
**St. Paul Minnesota 55144-1000 (US)**

(74) Representative: **Baillie, Iain Cameron et al**
**c/o Ladas & Parry Isartorplatz 5**
**D-8000 München 2 (DE)**

(54) **Regenerable diesel particulate trap.**

(57) This invention discloses a regenerable diesel particulate trap (10) comprised of alternately layered expanded ceramic fibers (12, 14, 16, 18, 20) and electrical heater elements (13, 15, 17, 19) wound onto a perforated substrate. The electrical heater elements (13, 15, 17, 19) may be energized to burn or oxidize the particulate in the trap (10).

FIG.1

**Description**

## REGENERABLE DIESEL PARTICULATE TRAP

Field of the Invention
The present invention relates to regenerable diesel particulate traps.

Description of the Prior Art
Diesel particulates, because of their chemical composition and extremely small size, have raised a host of health and welfare issues. Health experts have expressed concern that they contribute to or aggravate chronic lung diseases such as asthma, bronchitis and emphysema, and there may be a potential cancer risk from exposure to diesel particulates. The particles impair visibility, soil buildings, contribute to structural damage through corrosion, and give off a pungent odor.

Diesel particulate emissions from buses are particularly troublesome because they frequently are emitted into heavily congested areas.

The prior art has recognized the necessity of removing harmful substances from exhaust gases of internal combustion engines, especially carbon particles. U.S. Patent No. 3,937,015 discloses a device which has a body accommodating a filter element adapted to catch the particles in the exhaust gases. The device is attached to the engine like an exhaust manifold so that the particles are burned by hot gases, sometimes in the presence of chemicals which act as catalysts, whereby the filter element is recovered (cleaned for continued use). U.S. Patent No. 4,205,971 discloses a soot filter adapted to be arranged in an exhaust gas stream of internal combustion engines. A ceramic material of a hollow cylindrical shape is arranged in the filter housing and is supported by a wire mesh. A hollow space inside of the ceramic fiber material is connected in an axial direction with the exhaust gas line of the internal combustion engine. U.S. Patent No. 4,324,572 discloses a soot filter arrangement for an exhaust gas flow of an internal combustion engine, especially an air-compressing internal combustion engine. The filter arrangement includes a housing having a support pipe equipped with passage openings which enable the exhaust gas stream to enter the support pipe in a radial direction and leave the same in an axial direction. Several support pipes are provided at a mutual spacing in a parallel relationship and the filter material is spun silicon dioxide fibers wound onto the support pipes.

There are technical problems with each of the above regeneration techniques that make them impractical. The gas or chemical injection technique has to be done at set engine operating conditions. In certain applications these conditions may never be achieved. Also, the chemical leaves a metallic ash residue which plugs the filters over time. Secondary pollution caused by the chemical is another concern with this system.

Exhaust gas heating devices are difficult to control due to the changing conditions of the exhaust gases. A diesel fuel burner must have an elaborate feedback and monitor/control system to function properly. An electric heating coil requires a large amount of electrical power, more than the vehicle can supply, to heat the exhaust gases to the temperature necessary to start regeneration.

Summary of the Invention
The present invention comprises a gas permeable support and a plurality of alternately layered ceramic fiber filter materials and electrical heater elements. The layered filter materials together with the heater elements form variable sized open spaces extending radially from the permeable support and which are filled with filaments. Exhaust gases containing diesel particulate pass through the open spaces and are trapped by the filaments such that variable sized particulates are collected adjacent a heater element. The particulates are subsequently vaporized upon application of electrical energy to the heater elements.

The present invention will be more particularly described with reference to the accompanying drawing, wherein like numbers refer to like parts in the several views, and wherein:

Description of the Drawing

Figure 1 is an elevational view of an electrically regenerable diesel particulate trap of the present invention with successive layers removed; and

Figure 2 is a schematic representation of an exhaust system for an internal combustion engine containing at least one electrically regenerable diesel particulate trap of the present invention.

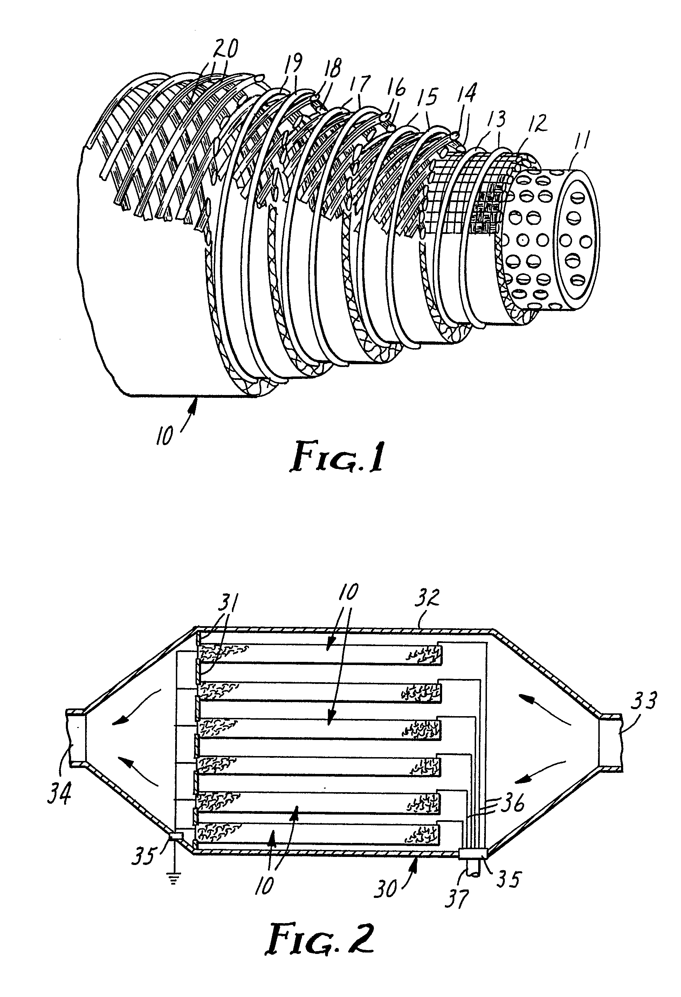

Detailed Description of the Invention
As illustrated by Figure 1, a regenerable diesel particulate trap, generally indicated as 10, is comprised of a support 11, snugly covered by a sleeve 12, on which is wound an electrical heater element 13 and a wound expanded ceramic fiber 14. Alternately thereafter is wound an electrical heater element 15, an expanded ceramic fiber 16, an electrical heater element 17, an expanded ceramic fiber 18, an electrical heater element 19, and an expanded ceramic fiber 20.

The support 11 is preferably a 316 stainless steel (16 gauge) tube with 4.76 mm diameter holes spaced 6.35 mm apart, but may be stainless steel wire welded cloth or stainless steel welded wire mesh. Supports 11 so constructed provide an open area of 63, 74 and 81 percent respectively, and are sufficiently rigid so as to withstand 5 p.s.i. air pressure. The 63 percent open area of the stainless steel tube is preferred.

The sleeve 12 is a gas permeable fiber fabric, preferably ceramic, created by means of a sequential treatment comprising:

(a) heat cleaning a woven fiber fabric at a temperature and for a time period sufficient to remove all undesired organic materials (e.g., sizing), preferably the temperature is in the range of 450° to 750°C., most preferably 650°C., preferably for a time in the range of 1.5 to 0.25 hours, most preferably about 30 minutes.

(b) gently mechanically flexing or manipulating the fabric at room temperature (for example, tumbling in an ordinary home laundry clothes dryer for 15 to 30 minutes, preferably about 15 minutes) which realigns or consolidates the fibers so as to fill in spaces or opening and reduce fabric permeability to particulate to a uniform minimum value; and

(c) heat treating at a temperature and for a time period sufficient to heat set the fabric so as to increase its resistance to corrosion, for example, at a temperature in the range of 800° to 1100°C. for 2 hours to 10 minutes, preferably 950° - 1000°C. for continuous fiber fabric alumina-boria-silica (Nextel 312™ ceramic fiber fabric, 3M Company, St. Paul, Minnesota). This procedure causes fibers to show increased durability.

Permeability as referred to herein is measured by the procedure described in ASTM D-73-75 and is controlled normally by the type of weave used to make a cloth. However, with stiff ceramic fibers, a cloth cannot be woven tightly because the fiber breaks. Loose weave provides an "open" weave cloth and the permeability of the untreated fabric is quite variable because of the opening between fibers.

It has been found that measurements of permeability tend to vary widely unless the samples have been heat cleaned and then gently flexed. Heat cleaned samples of fabric which have not been flexed also display substantial variability in permeability. Gentle flexing of the cloth reduces its permeability to the minimum attainable for that particular fabric. The choice of yarn, weave pattern, and pick count can be varied to control the basic or minimum permeability for any particular woven fabric.

The woven ceramic fiber fabric which can make up the sleeve filter element 12 of the present invention comprises woven strands of ceramic fibers, each of which may be made of the same or different continuous ceramic fiber or a blend of two or more kinds of continuous ceramic fibers. Strands of ceramic fiber are made into a pliable fabric which is then subjected to the above-described heat and mechanical treatment; the fibers may be twisted, twistless, false-twisted, tangled, braided, or spun stable fibers. The ceramic fiber strands are comprised of inorganic fibers such as continuous fused silica fibers (Astroquartz™, J. P. Stevens, Co., NY), leached fiberglass such as Refrasil™ (99% silica, HITCO, Los Angeles, CA.), non-vitreous ceramic fibers such as Nicalon™ silicon carbide fiber (Nippon Carbon, Ltd., Japan), or fibers of ceramic metal oxide(s) (which can be combined with non-metal oxides, e.g., oxide(s), e.g., $SiO_2$ such as zirconia-silica fibers, alumina-silica fiber, graphite fiber (Union Carbide), alumina-chromia-metal (IV) oxide fiber (see U.S. Pat. No. 4,125,406), or titania fibers. Preferably, the ceramic fiber fabric comprises continuous alumina-boria-silica ceramic fibers having an alumina:boria mol ratio of 9:2 to 3:1.5, and containing up to 65 weight percent silica, preferably 20 to 50 weight percent silica. Nextel 312 ceramic fiber meets these requirements and is described in 3M Bulletins N-MHFOL(79.5)MP, N-MPBFC-2(109.5)11, N-MPBVF-1(89.5)11, N-MTDS(79.5)MP, N-MPBBS-(89.5)11, and N-MOUT (89.4)MP. The ceramic fiber fabric may be of any pre-selected thickness. Preferably, the fabric has a thickness in the range of 0.5 to 1.0 mm so as to provide a pressure drop across the filter fabric of about 0.25 cm of water, which does not interfere with filter performance. The ceramic fiber fabric after being heat and mechanically treated as described above has surprising and unusual permeability characteristics, i.e., a uniform minimum permeability of up to 2.0 L/M/cm², preferably in the range of 0.15 to 2.0, maintains its integrity for prolonged periods at temperatures up to at least 1150°C and for at least short periods at temperatures up to at least 1400°C, and no openings are visible, even at a magnification of 7.5 times.

The support 11, covered by the sleeve 12, is then placed on a Leesona 45 winder which is set up with a cross-wind pattern at a 3.4549 gear ratio. The support is held onto the winder by means of an expansion clip mandrel. Leaving a 5.08 cm margin on each end, No. 26 Kanthal (.40 mm diameter, 72.2% Fe, 22.0% Cr. 5.8% Al) resistance wire 13 is spiral wound at 1.27 cm increments around the sleeve over an 20.32 cm length with 15.24 cm long (1.21 mm diameter) leads attached.

A ceramic fiber layer 14 of Nextel 312 expanded ceramic fiber (1800 denier, 2/2 1.5Z, 60.96 m long) is wound over the heater wire 13 with a minimum of 300 gms of tension. This produces a defined diamond pattern with expanded filaments protruding between the diamonds. This layering process is repeated three more times, offsetting the heater wire 3.04 mm each time, such that ceramic fiber layers 16, 18, 20 and heater elements 15, 17, 19 are produced to complete the regenerable diesel particulate trap 10. Such a layering and winding process causes a portion of a heater element to be located within a diamond shaped opening and allows particulate to be collected adjacent the heater element portion.

An alternative construction for one or more of the ceramic fiber layers 14, 16, 18 or 20 is to weave fibers into a suitably sized mat or cloth and wrap this mat around the support, over the appropriate layer of heater elements 16, 18 or 20. It should be noted that although a specific number of layers of ceramic fiber 14 16, 18, 20 and heater elements 15, 17, 19 are shown and described, any number adequate to achieve the filtering result required could be used.

Two regenerable diesel particulate traps 10 produced as above were then tested within a canister on a Ricardo single cylinder diesel engine set at 2000 rpm, 19 Nm and loaded with soot until the incremental exhaust back-pressure reached 100 cm. The traps were weighed and found to hold 1.25 grams of particulate. Collection efficiency ratings were conducted throughout the testing and were found to start at 25% on virgin traps and improve to 95% after several cycles. Trap collection efficiency for the complete run averaged 71%.

Each trap was then alternately electrically energized with 120 volts (1450 watts) for 3 minutes such that one trap was regenerating while the other was loading. Each trap was effectively cleaned of particulate upon regeneration.

Figure 2 shows an exhaust system 30 containing regenerable particulate traps 10 of the invention, cartridge support plates 31, a canister 32, an exhaust inlet 33, an exhaust outlet 34, insulators 35, heater lead wires 36 and an electrical connection cable 37.

In use, the particulate traps 10 may be energized individually or in any combination to clean the traps 10 and provide continued filtering of exhaust gas.

## Claims

1. An electrically regenerable particulate trap (10) comprising a gas permeable support (11) and a plurality of alternately layered ceramic fiber filter materials (12, 14, 16, 18, 20) and electrical heater elements (13, 15, 17, 19), said filter materials (12, 14, 16, 18, 20) together with said heater elements (13, 15, 17, 19) forming variable-sized open spaces extending radially from the permeable support (11) requiring exhaust gases to pass through said spaces so that particulates in said exhaust gases are collected adjacent a heater element (13, 15, 17, 19) portion and subsequently vaporized upon application of electrical energy to said heater elements (13, 15, 17, 19).

2. An electrically regenerable particulate trap (10) according to claim 1 wherein said filter layer (12) adjacent said gas permeable support (11) is woven ceramic fiber fabric having uniform gas permeability of less than 1.5 L/M/cm², said fabric being capable of maintaining its integrity for prolonged periods at temperatures of about 1150°C., and said fabric having essentially no visible spaces or openings present between the yarns at magnification of 7.5 times.

3. An electrically regenerable particulate trap (10) according to claim 2 wherein said ceramic fibers are selected from the group consisting of continuous fused silica, leached fiberglass, alumina-silica, zirconia-silica, alumina-chromia-metal (IV) oxide, titania, graphite, silicon carbide, and alumina-boria-silica fibers.

4. An electrically regenerable particulate trap (10) according to claim 2 wherein said ceramic fibers are alumina-boria-silica ceramic fibers.

5. An electrically regenerable particulate trap (10) according to claim 2 wherein said ceramic fibers are alumina-silica.

6. An electrically regenerable particulate trap (10) according to claim 1 wherein the gas permeable support (11) is selected from stainless steel tube, stainless steel wire woven cloth, or stainless steel welded wire mesh.

7. An electrically regenerable particulate trap (10) according to claim 1 wherein the layered ceramic fiber filter materials (12, 14, 16, 18, 20) are selected from the group consisting of continuous fused silica, leached fiberglass, aluminasilica, zirconia-silica, alumina-chromia-metal (IV) oxide, titania, graphic, silicon carbide, and alumina-boriasilica fibers.

8. An electrically regenerable particulate trap (10) according to claim 7 wherein said ceramic fibers are alumina-boria-silica ceramic fibers.

9. An electrically regenerable particulate trap (10) according to claim 1 wherein said layered ceramic fiber filter materials (12, 14, 16, 18, 20) and electrical heater elements form diamond shaped openings such that particulate is collected adjacent a heater element (13, 15, 17, 19) portion.

10. An electrically regenerable particulate trap (10) according to claim 1 wherein the electrical heater elements (13, 15, 17, 19) are electrical resistance metallic wire.

11. An electrically regenerable particulate trap (10) according to claim 1 wherein said ceramic fiber filter materials (12, 14, 16, 18, 20) are formed by braiding or winding ceramic strands directly on said permeable support (11) or said heater elements (13, 15, 17, 19).

12. An exhaust gas, electrically regenerable cleaning device (10) for an internal combustion engine comprising:
a canister (32) including an inlet (33) for receiving exhaust gas from said engine and an outlet (34);
at least one filter element (10) within said canister (32) including a plurality of alternately layered ceramic fiber filter materials (12, 14, 16, 18, 20) and electrical heater elements (13, 15, 17, 19), said filter materials (12, 14, 16, 18, 20) being effective to remove particulates from said exhaust gas;
means within said canister (32) for directing said exhaust gases from said inlet (33), through said filter element (10) and to said outlet (34),
means extending through said canister (32) for electrically energizing said heater elements (13, 15, 17, 19) to burn said exhaust gas particulates.

FIG.1

FIG.2